# FASCICULE DE BREVET EUROPEEN

(11) **EP 0 599 751 B1**
(45) Date de publication et mention de la délivrance du brevet: **07.01.1999**
(21) Numéro de dépôt: 93420464.5
(22) Date de dépôt: 22.11.1993
(51) Int. Cl.: B21D 53/84, F16H 53/02

(54) **Procédé et dispositif de frettage d'au moins une pièce métallique ayant au moins un alésage cylindrique autour d'un tube métallique**
Verfahren und Vorrichtung zum Fixieren eines mit zumindest einer zylindrischen Bohrung versehenen metallischen Stückes um ein metallisches Rohr
Method and device to attach a metal piece with a cylindrical bore around a metallic tube

(30) Priorité: 24.11.1992 FR 9214348
(43) Date de publication de la demande: 01.06.1994
(73) Titulaire: SINTERTECH, F-92400 Courbevoie (FR)
(72) Inventeur: Blanchard, Pierre, F-38240 Meylan (FR); Gueydan, Henri, F-38430 Moirans (FR); Malherbe, André, F-51300 Vitry-en-Perthois (FR)
(74) Mandataire: de Beaumont, Michel

(56) Documents cités:
- EP-A- 0 119 112
- DE-A- 3 302 762
- DE-U- 8 490 141
- GB-A- 1 117 816
- US-A- 2 892 254
- US-A- 5 038 596

## Description

L'invention concerne un procédé de frettage d'au moins une pièce métallique ayant au moins un alésage cylindrique autour d'un tube métallique, en particulier un arbre à cames métallique, utilisé par exemple dans un moteur automobile, et un dispositif de frettage selon le préambule de la revendication 1.

On connaît par le brevet US-A-4882825 un procédé de frettage d'au moins une pièce métallique ayant un alésage autour d'un tube métallique, dans lequel on introduit le tube avec du jeu dans ledit alésage et on dilate par l'intérieur ledit tube jusqu'à son frettage dans l'alésage. Selon ce procédé, la dilatation est effectuée en remplissant le tube d'un fluide qu'on met sous pression de façon à déformer le tube qui pénètre dans des rainures de l'alésage de la pièce métallique, ces rainures ayant de préférence une largeur circonférentielle d'au moins 1,5 fois l'épaisseur du tube de façon à éviter les formations de fissures observées antérieurement dans de telles pièces ou "cames" ayant des rainures plus petites. La dilatation est effectuée par ce procédé en même temps pour toute la longueur du tube, qu'il s'agisse du frettage d'une seule pièce autour du tube ou du frettage de pièces espacées.

On connaît aussi par la demande de brevet allemand DE-A-3302762, un dispositif de frettage selon le préambule de la revendication 1 et un procédé analogue dans lequel l'expansion radiale du tube est effectuée par le passage d'un dudgeon à l'intérieur du tube, à l'aide d'un bloc de montage en deux parties comprenant les logements des pièces à fixer sur le tube.

Cependant, il a été remarqué que dans le cas d'un tube portant plusieurs pièces, typiquement un arbre à cames, il se produisait après le frettage par expansion radiale et lors du retrait du montage utilisé, des déformations de l'assemblage obligeant soit à redresser le tube et le plus souvent à le rectifier, soit à retoucher les cames, à cause de leurs variations angulaires après le frettage.

La demanderesse a mis au point un dispositif et un procédé de frettage évitant au moins de telles rectifications.

L'invention est un dispositif de frettage d'au moins une pièce métallique munie d'au moins un alésage autour d'un tube métallique à l'aide d'un dudgeon mobile en translation suivant l'axe du tube, et d'un dispositif de maintien desdites pièces métalliques comprenant un bloc de montage en deux parties maintenues serrées, dans lesquelles sont usinés les logements des pièces, caractérisé en ce qu'il comporte une butée éclipsable coulissant dans une plaque rapportée située à l'extrémité aval du bloc de montage dans le sens de déplacement du dudgeon, lors du dudgeonnage.

La butée éclipsable du dispositif, dont on verra le rôle dans la description du procédé, peut être éclipsée soit translation soit par rotation.

Le procédé selon l'invention comporte les opérations suivantes :
a) on place le bloc de montage entre les deux plateaux d'une presse, et on solidarise, chacune des parties avec le plateau supérieur et le plateau inférieur. Cette presse est de préférence une presse hydraulique, dont on peut piloter la force de serrage ;
b) dans le bloc inférieur, on place les différentes pièces dans leurs logements ;
c) on ferme le bloc en appliquant une pression de serrage supérieure à 1 MPa ;
d) on introduit le tube dans les alésages jusqu'à son appui sur la butée éclipsable ;
e) on introduit la tige du dudgeon dans le tube et on l'attelle au dispositif de déplacement ;
f) on déplace axialement le dudgeon jusqu'à son passage complet dans le ler alésage ;
g) on éclipse la butée ;
h) on poursuit le dudgeonnage jusqu'à l'extrémité libre du tube ;
i) on ouvre le bloc de montage ;
j) on retire la pièce finie.

- Le bloc de montage en deux parties comporte les logements des pièces à monter sur le tube, disposés le long du tube, orientés angulairement les uns par rapport aux autres, et usinés avec précision.
   Les pièces sont soit des cames, soit des paliers, soit des organes d'entraînement (poulies...) ou autres.
- Les pièces à fixer sur le tube sont munies chacune d'au moins un alésage cylindrique, de diamètre légèrement supérieur au diamètre du tube, typiquement +0,04 à +0,2 mm.
   Lorsque les pièces sont dans leur logement et le bloc de montage fermé, les alésages desdites pièces sont co-axiaux.
   Pour augmenter le couple transmis et éviter des défauts néfastes à la tenue mécanique, en particulier en fatigue, ces alésages peuvent être munis de 3 à 15 rainures longitudinales ; plus couramment on utilise 3 à 12 rainures, régulièrement espacées le long de la circonférence.
   Il a été en effet constaté que lorsque l'alésage était lisse, le dudgeon chassait devant lui, depuis son entrée dans la portion du tube entourée par un alésage de pièce jusque vers sa sortie de cette portion, un petit bourrelet interne annulaire du tube et que ce bourrelet était souvent transformé en repli annulaire à la sortie de la pièce, la paroi du tube ne se trouvant plus en compression. Un tel repli diminue la résistance à la fatigue du tube muni des pièces frettées, typiquement un arbre à cames. On a remarqué avec étonnement que le fait de munir l'alésage d'une des pièces métalliques précédentes de petites rainures espacées permettait d'éviter totalement le repli annulaire précédent. En outre, les portions raccordant chaque rainure aux parties lisses de l'alésage, de préférence rayonnées selon un rayon compris entre 0,1 et 0,5 mm, augmentent considérablement le couple anti-desserrage de la pièce par rapport au tube, celui-ci passant par exemple de 50 à plus de 150 N.m grâce à au moins trois rainures espacées de rayon de raccordement de 0,2 à 0,3 mm. On utilise ainsi 3 à 15 rainures, plus couramment 5 à 12 rainures, espacées sur le pourtour de l'alésage et ayant typiquement une largeur intérieure, au-delà desdites portions de raccordement rayonnées, comprise entre 0,4 et 0,9 mm. L'épaisseur du tube métallique étant couramment de 1 à 2,5 mm, on voit que ces rainures sont beaucoup plus petites que celles de l'art antérieur cité et que leur rôle est différent, le métal du tube n'y fluant que légèrement avec une légère impression de ce tube par les portions de raccordement rayonnées de la rainure. Le seul effet de léger fluage local ne permet pas d'expliquer correctement la disparition du relief annulaire, cette disparition reste surprenante.
   Les pièces (en particulier les cames et paliers) sont généralement traitées pour obtenir une limite élastique Rp 0,2 supérieure à 500 MPa et un allongement à rupture supérieur à 2%.
   Selon des modes de mise en oeuvre préférés :
- Le tube est un tube circulaire du commerce, généralement en acier, d'épaisseur comprise entre 1 et 2,5 mm. Typiquement aussi, il est en acier de limite élastique à 0,2% égale au miniumum à 300 MPa. L'épaisseur de 1 mm est liée à la rigidité souhaitable, tandis que celle de 2,5 mm concerne la facilité du travail de dilatation. L'allongement du tube en déformation plastique d'expansion est couramment supérieur à 10% et en cela suffisant.
- Le dudgeon, généralement cylindro-conique est fixé de façon permanente à l'extrémité d'une tige, l'autre extrémité de celle-ci étant attelable au dispositif de déplacement axial (en général un vérin hydraulique). Le cône d'entrée du dudgeon a un ½ angle au sommet généralement compris entre 5 et 10°. Le diamètre hors-tout du dudgeon est supérieur de 0,1 à 0,5 mm au diamètre intérieur du tube. La somme du diamètre du dudgeon et de deux fois l'épaisseur du tube est supérieure d'au moins 0,04 mm à celle de l'alésage des pièces. Son déplacement est assuré de préférence par traction pour éviter des flambages parasites du tube.

Une des caractéristiques importantes de l'invention est que, après fixation de la lère pièce par dudgeonnage, l'extrémité aval du tube est libérée, ce qui permet une libre rotation et une libre dilatation axiale de cette partie libre du tube au cours du dudgeonnage. Aussi, les distorsions dues soit à l'existence de contraintes résiduelles dans le tube, soit à un léger excentrement, ou tout autre cause, sont annulées, contrairement aux méthodes de l'art antérieur, dans lequel les deux extrémités du tube sont fixées.

Il en résulte que les pièces conservent leurs positions axiales, longitudinales et angulaires qu'elles ont dans le bloc de montage. Il n'est donc plus nécessaire ni de redresser, ni de rectifier le produit final.

De plus, on a remarqué que lors du dudgeonnage, les pièces sont elles-mêmes calibrées à froid dans leurs logements, ce qui contribue en particulier à l'obtention d'une géométrie précise et d'un meilleur état de surface.

Le couple anti-desserrage des pièces sur le tube est généralement supérieur à 150 N.m.

L'invention sera mieux comprise à l'aide de l'exemple suivant relatif à la fabrication d'un arbre à cames et illustrée par les figures.
La figure 1 représente schématiquement une vue générale du dispositif selon l'invention, en coupe axiale partielle.
La figure 2 représente une vue de côté du dispositif selon l'invention.
La figure 3 représente une vue en coupe transversale de la liaison d'une pièce et du tube en présence de rainures.
La figure 4 représente en coupe axiale deux autres modes de réalisation de l'invention.

Le dispositif selon l'invention comporte un bloc de montage 1, en deux parties 1a et 1b, s'assemblant selon le plan de joint 2 passant généralement par l'axe 5.
Le bloc de montage 1 est placé entre les 2 plateaux d'une presse hydraulique exerçant une pression P; chaque partie 1a et 1b est solidarisée à chacun des plateaux par des moyens connus non représentés.

Dans ce bloc de montage 1 sont placées les pièces telles que 4a, 4b, 4c, dont les alésages sont sur l'axe 5 du tube 6.

Le dispositif comporte encore un dudgeon 7 porté par une tige 8, reliée à un dispositif de déplacement, non représenté, dans le sens de la flèche F.

Une butée amovible 9 est positionnée à l'extrémité aval 6a du tube 6. Elle est éclipsable par translation suivant la flèche F'.

La butée 9 comporte une ouverture 10 en forme de trou de serrure, dont la partie la plus large a un diamètre supérieur au diamètre extérieur du tube 6 et dont la partie étroite a une dimension inférieure au diamètre intérieur du tube 6. Elle coulisse dans la plaque rapportée 12. Le bloc de montage 1 est fixé a une semelle 11 qui porte également le vérin de traction (non représenté).

### Premier exemple de frettage selon l'invention :

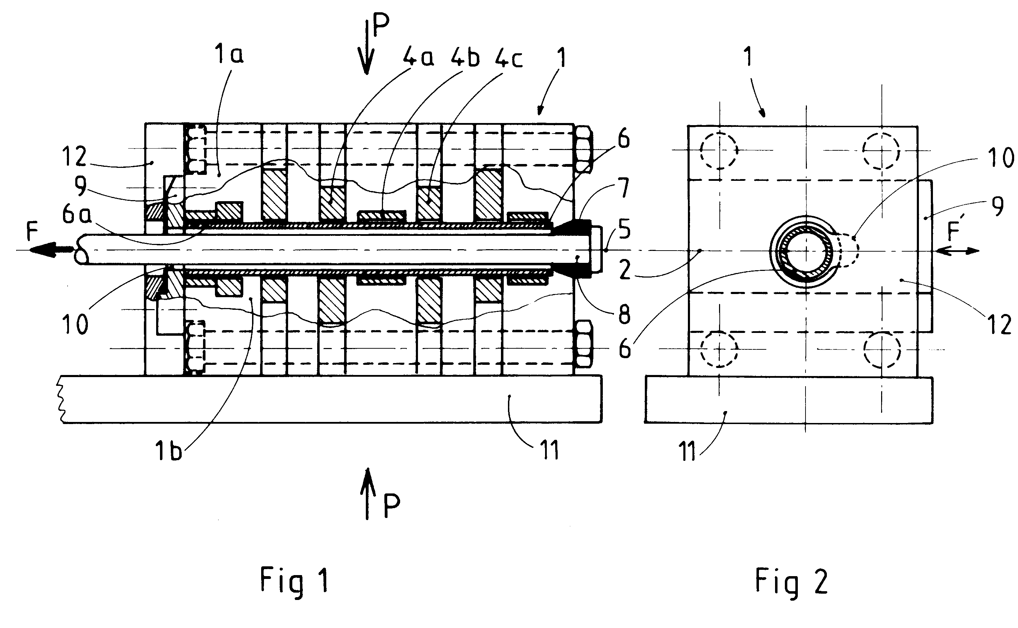

comme représenté sur les figures 1 et 2, un tube en acier 6 qui a avant dilatation une épaisseur de 1,2 mm et une limite élastique E 0,2 en long égale à 400 MPa. Ce tube 6 a avant dilatation des diamètres intérieur et extérieur respectivement égaux à 23,96 mm et 26,36 mm.

Les cames métalliques 4a, 4c en cours de fixation sur le tube 6 ont été obtenues par frittage et sont en acier à 0,85% de Mo. Leur alésage cylindrique a un diamètre de 26,54 mm et leur épaisseur est de 14 mm. Le dudgeon 7 est en carbure de tungstène fritté ; il comprend une portion d'entrée tronconique inclinée à 10° sur l'axe 5, débutant au diamètre 23,6mm et se raccordant à sa portion cylindrique de diamètre 24,25 mm.

La pression exercée par les plateaux de la presse hydraulique est de 1,5 MPa. La résistance au desserrage en rotation des cames 4a, 4c par rapport au tube 6 sur lequel elles ont ainsi été frettées a été trouvée égale à 70 N.m.

### Deuxième exemple de frettage selon l'invention :

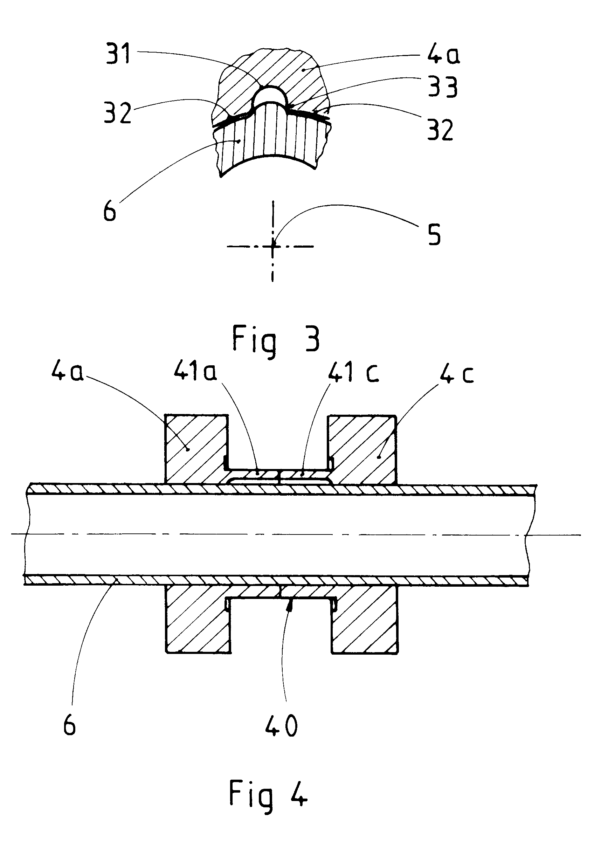

on a utilisé des cames métalliques 4a, 4c de même nature et de même géométrie que précédemment, la seule modification étant que l'alésage de chaque came 4a, 4c porte dix rainures longitudinales 31 régulièrement espacées. Ces rainures 31 ont en section droite (fig.3) un contour en demi-cercle de rayon 0,4 mm raccordé aux parties lisses 32 de l'alésage par des portions rayonnées 33 de rayon 0,3 mm.
On a fretté trois de ces cames 4a, 4b comportant des rainures 31, avec un espacement de 20 mm sur un tube du même lot que le tube 6, ces 3 cames étant maintenues avec leurs alésages alignés et des orientations différentes, le bloc de montage (1, 1a, 1b) en acier ayant une dureté de 45 HRc.

La pression exercée par les plateaux de la presse hydraulique au niveau du plan de joint (2) était de 1,5 MPa.

On a fait les constatations suivantes sur l'ensemble obtenu après dudgeonnage :
a) les cames ont sur leur pourtour un glaçage discontinu, montrant un calibrage dû à l'expansion de chaque came ;
b) le couple anti-desserrage en rotation de chaque came est de 230 N.m ;
c) après démontage du bloc de montage, les orientations relatives des trois cames restent inchangées.

D'autres modes de réalisation de l'invention peuvent être envisagés saus sortiè du cadre de l'invention telle que revendiquée.

En particulier, comme le montre la figure 2, un palier en acier 4b fixé par dudgeonnage sur l'arbre tubulaire 6 comme les cames 4a, 4c, qui l'encadrent.

Comme le montre la figure 4, le palier 40 est formé par la juxtaposition des parties latérales 41a, 41c des cames 4a et 4c.
Cette partie peut être dudgeonnée (partie inférieure de la figure 4) ou non (partie supérieure de la figure 4) sur le tube 6.

Outre les avantages déjà mentionnés antérieurement, le mode offre un avantage économique par rapport à l'art antérieur (suppression des opérations de dressage et/ou de rectification) ; elle est facilement automatisable, ce qui contribue à sa productivité et rentabilité.

L'invention trouve son application principalement dans la fabrication des arbres à cames.

## Revendications

1. Dispositif de frettage d'au moins une pièce métallique (4a, 4b, 4c) munie d'au moins un alésage autour d'un tube métallique (6) à l'aide d'un dudgeon (7) mobile en translation suivant l'axe (5) du tube (6), et d'un dispositif de maintien desdites pièces métalliques comprenant un bloc de montage (1) en deux parties (1a, 1b) maintenues serrées, dans lesquelles sont usinés les logements des pièces, caractérisé en ce qu'il comporte une butée éclipsable (9) coulissant dans une plaque rapportée (12) située à l'extrémité aval du bloc de montage (1) dans le sens de déplacement du dudgeon (7), lors du dudgeonnage.

2. Procédé de frettage d'au moins une pièce métallique (4a, 4b, 4c) ayant au moins un alésage sur un tube (6) à l'aide d'un dudgeon (7) mobile en translation suivant l'axe (5) du tube (6) les pièces étant maintenues dans un bloc de montage (1, 1a, 1b) comportant une butée éclipsable (9) coulissant dans une plaque rapportée (12) située à l'extrémité aval dudit bloc de montage (1, 1a, 1b) dans le sens du déplacement dudit dudgeon (7), dans lequel on pratique les étapes suivantes :
a) on place le bloc de montage (1, 1a, 1b) entre les deux plateaux d'une presse, de préférence une presse hydraulique dont on peut piloter la force de serrage, et on solidarise chacune des parties (1a, 1b) avec le plateau supérieur et le plateau inférieur
b) dans le bloc inférieur (1b), on place les différentes pièces dans leurs logements
c) on ferme le bloc de montage (1a, 1b, 1c) en appliquant une pression de serrage supérieure à 1 MPa
d) on introduit le tube (6) dans les alésages jusqu'à son appui sur la butée éclipsable (9)
e) in introduit la tige (8) du dudgeon (7) dans le tube (6) et on l'attelle au dispositif de déplacement
f) on déplace axialement le dudgeon (7) jusqu'à son passage complet dans le ler alésage
g) on éclipse la butée (9)
h) on poursuit le dudgeonnage jusqu'à l'extrémité libre du tube (6)
i) on ouvre le bloc de montage (1, 1a, 1b)
j) on retire la pièce finie.

3. Procédé selon la revendication 2 caractérisé en ce que les pièces (4a, 4b, 4c) portent sur leur alésage des rainures longitudinales (31) espacées.

4. Procédé selon la revendication 3, dans lequel chaque dite rainure (31) se raccorde aux parties lisses (32) de l'alésage (3) par des portions rayonnées (33) de rayon 0,1 à 0,5 mm.

5. Procédé selon la revendication 4, dans lequel lesdites rainures (31) sont au nombre de 3 à 15 et ont chacune une largeur intérieure, au-delà desdites portions rayonnées (33), comprise entre 0,4 et 0,9 mm.

6. Procédé selon l'une quelconque des revendications 2 à 5, dans lequel le tube métallique (6) est de section circulaire et a une épaisseur comprise entre 1 et 2,5 mm, et dans lequel le dudgeon (7) a un diamètre hors-tout tel que la somme de ce diamètre et de deux fois ladite épaisseur du tube (6) soit supérieure d'au moins 0,04 mm au diamètre dudit alésage de chaque pièce métallique (4a, 4b, 4c).

7. Procédé selon la revendication 6, dans lequel le dudgeon (7) a un pourtour cylindrique circulaire ayant un diamètre extérieur supérieur de 0,1 à 0,5 mm au diamètre intérieur dudit tube métallique (6), et dans lequel le jeu de l'alésage de chaque pièce métallique (4a, 4b, 4c) par rapport au tube (6) est de 0,04 à 0,2 mm au diamètre.

8. Procédé selon l'une quelconque des revendications 2 à 7 caractérisé en ce que la pression appliquée sur le plan de joint du bloc de montage (1) est supérieure à 1 MPa.

## Claims

1. A device for binding at least one metallic part (4a, 4b, 4c) having at least one bore about a metallic tube (6) with an expander (7) slidable along the axis (5) of the tube (6) and a holding device of said metallic parts comprising a mounting block (1) with two elements (1a, 1b) held tightly together, in which recesses for the parts have been machined, characterized in that it comprises a removable stop (9) sliding in a plate (12) located at the downstream end of the mounting block (1) in the displacement direction of the expander (7) during expansion.

2. A method for binding at least one metallic part (4a, 4b, 4c) having at least one bore on a tube (6) with an expander (7) slidable along the axis (5) of the tube (6), the part being maintained in a mounting block (1, 1a, 1b) comprising a removable stop (9) sliding in a plate (12) located at the downstream end of said mounting block (1, 1a, 1b) in the displacement direction of said expander (7), in which the following steps are carried out:
a) placing the mounting block (1, 1a, 1b) between the two plates of a press, preferably a hydraulic press whose force is controllable, and attaching the elements (1a, 1b) to the upper plate and the lower plate,
b) placing the different parts in the recesses of the lower portion (1b) of the block,
c) closing the mounting block (1a, 1b, 1c) by applying a pressure greater than 1 MPa,
d) introducing the tube (6) in the bores until it contacts the removable stop (9),
e) introducing the tail (8) of the expander (7) in the tube (6) and attaching it to the displacement device,
f) axially displacing the expander (7) until it completely passes through the first bore,
g) removing the stop (9),
h) continuing the expansion up to the free end of the tube (6),
i) opening the mounting block (1, 1a, 1b),
j) removing the finished assembly.

3. The method according to claim 2, characterized in that the parts (4a, 4b, 4c) have, in their bores, spaced apart longitudinal slots (31).

4. The method according to claim 3, in which each of said slots (31) is linked to the smooth portions (32) of the bore (3) by rounded portions (33) having a radius of 0.1 to 0.5 mm.

5. The method according to claim 4, in which said slots (31) are in a number of 3 to 15 and each have an internal width, beyond said rounded portions (33), comprised between 0.4 and 0.9 mm.

6. The method according to any of claims 2 to 5, in which the metallic tube (6) has a circular section and a thickness comprised between 1 and 2.5 mm and in which the expander (7) has an external diameter such that the sum of this diameter and of twice said thickness of the tube (6) is greater by at least 0.04 mm to the diameter of said bore of each metallic part (4a, 4b, 4c).

7. The method according to claim 6, in which the expander (7) has a circular cylindrical periphery having an external diameter greater by 0.1 to 0.5 mm to the internal diameter of said metallic tube (6), and in which the clearance of the bore of each metallic part (4a, 4b, 4c), with respect to the tube (6), ranges from 0.04 to 0.2 mm in diameter.

8. The method according to any of claims 2 to 7, characterized in that the pressure applied on the joint plane of the mounting block (1) is greater than 1 MPa.

## Patentansprüche

1. Vorrichtung zur Verbundfixierung wenigstens eines wenigstens eine Bohrung aufweisenden metallischen Werkstücks bzw. Metallteils (4a,4b,4c) auf einem von ihm umschlossenen Metallrohr (6) um dieses herum mit Hilfe eines längs der Achse (5) des Rohrs (6) translatorisch verschieblichen Expansions- bzw. Aufweitdorns (7), sowie mit Hilfe einer Halterungsvorrichtung (1) für die genannten Metallteile, wobei die Halterungsvorrichtung einen Montage-bzw. Halterungsblock (1) mit zwei miteinander verspannten Teilen (1a,1b) aufweist, in welchen die Ausnehmungen zur Aufnahme der Metallteile ausgeformt sind,
**dadurch gekennzeichnet,** daß
die Vorrichtung einen verschließ- bzw. verengerbaren Anschlag (9) aufweist, der in einer Aufsteckplatte (12) gleitend verschieblich ist, die an dem stromabwärtigen Ende des Montage- bzw. Halterungsblocks (1) angeordnet ist, bezogen auf die Vorschubrichtung des Expansions- bzw. Aufweitdorns (7) beim Expansions- bzw. Aufweitvorgang.

2. Verfahren zur Verbundfixierung wenigstens eines wenigstens eine Bohrung aufweisenden metallischen Werkstücks bzw. Teils (4a,4b,4c) auf einem Rohr (6), mit Hilfe eines translatorisch in Richtung der Achse (5) des Rohrs (6) verschieblichen Expansions- bzw. Aufweitdorns (7), wobei die Metallteile bzw. Werkstücke in einem Montage- bzw. Halterungsblock (1,1a,1b) gehaltert sind, der einen verschließ- bzw. verengerbaren Anschlag (9) aufweist, der in einer Platte (12) gleitend verschieblich ist, die an dem in Richtung der Vorschubbewegung des genannten Expansions- bzw.Aufweitdorns (7) stromabwärtigen Ende des genannten Montage- bzw. Halterungsblocks (1,1a,1b) angeordnet ist, wobei das Verfahren die folgenden Stufen umfaßt:
(a) der Montage- bzw. Halterungsblock (1,1a,1b) wird zwischen den beiden Platten einer Presse, vorzugsweise einer Hydraulikpresse eingebracht, deren Preß-bzw, Schließdruck steuerbar ist, wobei die beiden Teile (1a,1b) der Halterungsvorrichtung jeweils mit der oberen bzw. der unteren Preßplatte fest verbunden werden,
(b) in dem unteren Block (1b) des Halterungsblocks werden die verschiedenen Werkstücke bzw. Teile in ihre Aufnahmen eingesetzt,
(c) der Montage bzw. Halterungsblock (1,1a,1b) wird mittels Aufbringung eines Preßdrucks von mehr als 1 MPa geschlossen,
(d) das Rohr (6) wird in die Bohrungen bis zur Anlage gegen den verschließ- bzw. verengerbaren Anschlag (9) eingeführt,
(e) die Zieh-bzw. Betätigungsstange (8) des Expansions- bzw. Aufweitdorns (7) wird in das Rohr (6) eingeführt und mit der Vorschub- bzw. Ziehvorrichtung gekuppelt,
(f) der Expansions- bzw. Aufweitdorn (7) wird bis zu seinem vollständigen Eintritt in die erste Bohrung vorgeschoben,
(g) der Anschlag (9) wird verschlossen bzw. verengt,
(h) der Expansins- bzw. Aufweitvorgang wird bis zum freien Ende des Rohrs (6) fortgesetzt,
(i) der Montage- bzw. Halterungsblock (1,1a,1b) wird geöffnet,
(j) das fertige Werkstück bzw. Teil wird entnommen.

3. Verfahren nach Anspruch 1, dadurch gekennzeichnet, daß die Werkstücke bzw. Teile (4a,4b,4c) an ihren Bohrungen in Abstand voneinander angeordnete Längsnuten (31) aufweisen.

4. Verfahren nach Anspruch 3, dadurch gekennzeichnet, daß jeweils jede Nut (31) mit den glatten Teilen (32) der Bohrung (6) über abgerundete Bereiche (33) mit Krümmungsradius von 0,1 bis 0,5 mm verbunden ist.

5. Verfahren nach Anspruch 4, dadurch gekennzeichnet, daß die genannten Nuten (31) jeweils in einer Anzahl von 3 bis 15 vorliegen, und daß sie jeweils, jenseits der abgerundten Bereiche (33), eine Innenbreite im Bereich zwischen 0,4 und 0,9 mm besitzen.

6. Verfahren nach einem der Ansprüche 2 bis 5, bei welchem das Metallrohr (6) kreisförmigen Querschnitt und eine Wandstärke im Bereich zwischen 1 und 2,5 mm besitzt, und bei welchem der Expansions- bzw. Aufweitdorn einen solchen Gesamtdurchmesser (Außendurchmesser) besitzt, daß die Summe aus diesem Durchmesser und dem Zweifachen der genannten Wandstärke des Rohrs (6) wenigstens um 0,04 mm größer als der Durchmesser der Bohrungen der jeweiligen metallischen Werkstücke bzw. Teile (4a,4b,4c) ist.

7. Verfahren nach Anspruch 6, bei welchem der Expansions- bzw. Aufweitdorn (7) einen kreiszylindrischen Umfang mit einem Außendurchmesser besitzt, der um 0,1 bis 0,5 mm größer als der Innendurchmesser des Metallrohrs (6) ist, und bei welchem das Spiel zwischen den Bohrungen der einzelnen metallischen Werkstücke (4a,4b,4c) bezüglich dem Rohr (6) 0,04 bis 0,2 mm in Durchmesserrichtung beträgt.

8. Verfahren nach einem der Ansprüche 2 bis 7, dadurch gekennzeichnet, daß der auf die Verbindungs- bzw. Stoßebene des Montage- bzw. Halterungsblocks (1) aufgebrachte Druck größer als 1 MPa ist.
